(19) **Europäisches Patentamt European Patent Office Office européen des brevets**

(11) **EP 2 751 416 B1**

(12) **FASCICULE DE BREVET EUROPEEN**

(45) Date de publication et mention de la délivrance du brevet:
**16.12.2015 Bulletin 2015/51**

(21) Numéro de dépôt: **12741040.5**

(22) Date de dépôt: **05.07.2012**

(51) Int Cl.:
*F02M 25/07* (2006.01)     *F02D 41/14* (2006.01)
*F02D 41/00* (2006.01)

(86) Numéro de dépôt international:
**PCT/FR2012/051570**

(87) Numéro de publication internationale:
**WO 2013/030471 (07.03.2013 Gazette 2013/10)**

(54) **SYSTÈME ET PROCÉDÉ DE COMMANDE D'UN MOTEUR A COMBUSTION INTERNE D'UN VÉHICULE AUTOMOBILE AVEC DES CIRCUITS DE RECIRCULATION DE GAZ D'ÉCHAPPEMENT HAUTE ET BASSE PRESSION EN FONCTIONNEMENT TRANSITOIRE**

SYSTEM UND VERFAHREN ZUR STEUERUNG DES VERBRENNUNGSMOTORS EINES KRAFTFAHRZEUGS MIT HOCHDRUCK- UND NIEDERDRUCK-ABGASRÜCKFÜHRUNGSSCHALTUNGEN IN EINEM ÜBERGANGSMODUSBETRIEB

SYSTEM AND METHOD FOR CONTROLLING AN INTERNAL COMBUSTION ENGINE OF AN AUTOMOTIVE VEHICLE WITH HIGH-PRESSURE AND LOW-PRESSURE EXHAUST GAS RECIRCULATION CIRCUITS IN TRANSIENT MODE OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2011 FR 1157601**

(43) Date de publication de la demande:
**09.07.2014 Bulletin 2014/28**

(73) Titulaire: **Renault S.A.S.**
**92100 Boulogne-Billancourt (FR)**

(72) Inventeurs:
- **FONTVIEILLE, Laurent**
  **F-91190 Gif-sur-yvette (FR)**
- **PETILLON, Yohann**
  **F-78180 Montigny Le Bretonneux (FR)**
- **GRONDIN, Olivier**
  **F-78380 Bougival (FR)**

(74) Mandataire: **Renou, Jean-François**
**Renault S.A.S.**
**TCR GRA 2 36 - Sce 00267**
**1 avenue du Golf**
**78084 Guyancourt Cedex (FR)**

(56) Documents cités:
**EP-A1- 1 607 606     WO-A1-2009/037543**
**FR-A1- 2 910 929     FR-A1- 2 956 160**
**FR-A3- 2 944 318     GB-A- 2 475 316**
**US-B1- 7 512 479**

**Description**

L'invention concerne le domaine du contrôle des moteurs à combustion interne avec recirculation partielle des gaz d'échappement à haute pression, à basse pression et à contrôle séquentiel, et plus particulièrement le contrôle de tels moteurs lors d'un régime transitoire.

Les moteurs à combustion interne sont commandés par des systèmes de commande mis au point en usine. Les systèmes sont mis au point en balayant plusieurs valeurs discrètes de grandeurs de contrôle. Les mises au point sont ainsi réalisées en régime stabilisé, c'est-à-dire dans une phase de fonctionnement dans laquelle les paramètres de commande ne varient pas.

Cependant, lors du déplacement du véhicule, le moteur à combustion interne passe par une succession de phases de fonctionnement stabilisé séparées par des phases de fonctionnement transitoire.

Lors des phases de fonctionnement transitoire d'un moteur à combustion interne, le moteur à combustion interne ne fonctionne pas dans des conditions similaires à celles de la calibration. Si le système n'a pas le temps de s'adapter aux nouvelles conditions de fonctionnement, les différents procédés de régulation ne sont pas efficaces. Cela est particulièrement le cas lors des changements de rapport de boîte de vitesses ou lors de décélérations suivies d'une réaccélération.

Pour pouvoir réguler le fonctionnement du moteur à combustion interne lors de ces phases, il est nécessaire d'accélérer le temps de réponse du système.

Selon un mode de réalisation de l'invention, on propose un système de commande d'un moteur à combustion interne équipé d'un circuit de recirculation partielle des gaz d'échappement à basse pression et d'un circuit de recirculation partielle des gaz d'échappement à haute pression, comprenant un moyen d'estimation de consignes de paramètres d'air admis. Le système de commande comprend un moyen d'estimation de la richesse d'échappement, un moyen de détermination d'une consigne de la richesse d'admission en fonction de consignes de paramètres d'air admis, un moyen de correction de l'une au moins des consignes de paramètres d'air admis en fonction de l'estimation de la richesse d'échappement et de la consigne de la richesse d'admission, un moyen de détermination d'une consigne corrigée de débit du circuit de recirculation partielle des gaz d'échappement à haute pression en fonction de la consigne corrigée de paramètres d'air admis, et un moyen de détermination d'une consigne corrigée de débit du circuit de recirculation partielle des gaz d'échappement à basse pression en fonction de la consigne corrigée de paramètres d'air admis.

Le moyen de détermination d'une consigne de la richesse d'admission peut comprendre une cartographie du rendement volumique et des moyens de mémorisation contenant la valeur de la richesse à la stoechiométrie, la constante des gaz et la cylindrée du moteur à combustion interne.

Le système peut comprendre un moyen de mesure de la température du collecteur d'admission, un moyen de mesure de la vitesse de rotation du moteur, et un moyen d'estimation de la richesse à l'échappement, dans lequel le moyen de correction de l'une au moins des consignes de paramètres d'air admis est apte à déterminer une consigne corrigée de l'une au moins des consignes de paramètres d'air admis en fonction de l'estimation de richesse d'échappement, de la consigne de la richesse d'admission, de la température du collecteur d'admission, de la vitesse de rotation du moteur, et de la richesse à l'échappement.

La consigne corrigée de débit d'air admis peut correspondre à la consigne de débit d'air admis si le moteur à combustion interne présente un fonctionnement stabilisé.

Les paramètres d'air admis peuvent comprendre la pression d'air admis et le débit d'air admis.

Le système peut comprendre un moyen de détermination de débit de suralimentation du circuit de recirculation partielle des gaz d'échappement à haute pression apte à ajouter à la consigne corrigée de débit du circuit de recirculation partielle des gaz d'échappement à haute pression, une valeur de suralimentation correspondant à l'écart entre la consigne de débit du circuit de recirculation partielle des gaz d'échappement à haute pression et la consigne corrigée de débit du circuit de recirculation partielle des gaz d'échappement à haute pression.

Selon un autre mode de réalisation, on propose un procédé de commande d'un moteur à combustion interne équipant un véhicule automobile, muni d'un circuit de recirculation partielle des gaz d'échappement à basse pression et d'un circuit de recirculation partielle des gaz d'échappement à haute pression, le procédé de commande comprenant une estimation de consignes de paramètres d'air admis. Le procédé comprend les étapes suivantes :

on estime la richesse d'échappement,
on détermine une consigne de la richesse d'admission en fonction des consignes de paramètres d'air admis,
on corrige l'une au moins des consignes de paramètres d'air admis en fonction de l'estimation de la richesse d'échappement et de la consigne de la richesse d'admission,
on détermine une consigne de débit du circuit de recirculation partielle des gaz d'échappement à haute pression en fonction de la consigne corrigée de paramètres d'air admis, et
on détermine une consigne de débit du circuit de recirculation partielle des gaz d'échappement à basse pression en fonction de la consigne corrigée de paramètres d'air admis.

On peut corriger l'une au moins des consignes de paramètres d'air admis en fonction de la vitesse de rotation du moteur, de la température d'admission et de la richesse d'échappement.

La correction de l'une au moins des consignes de paramètres d'air admis peut laisser inchangée ladite consigne de paramètre d'air admis lorsque le moteur à combustion interne est en fonctionnement stabilisé.

Les paramètres d'air admis peuvent comprendre la pression d'air admis et le débit d'air admis.

On peut ajouter à la consigne corrigée de débit du circuit de recirculation partielle des gaz d'échappement à haute pression, un débit de suralimentation correspondant à l'écart entre la consigne de débit du circuit de recirculation partielle des gaz d'échappement à haute pression et la consigne corrigée de débit du circuit de recirculation partielle des gaz d'échappement à haute pression.

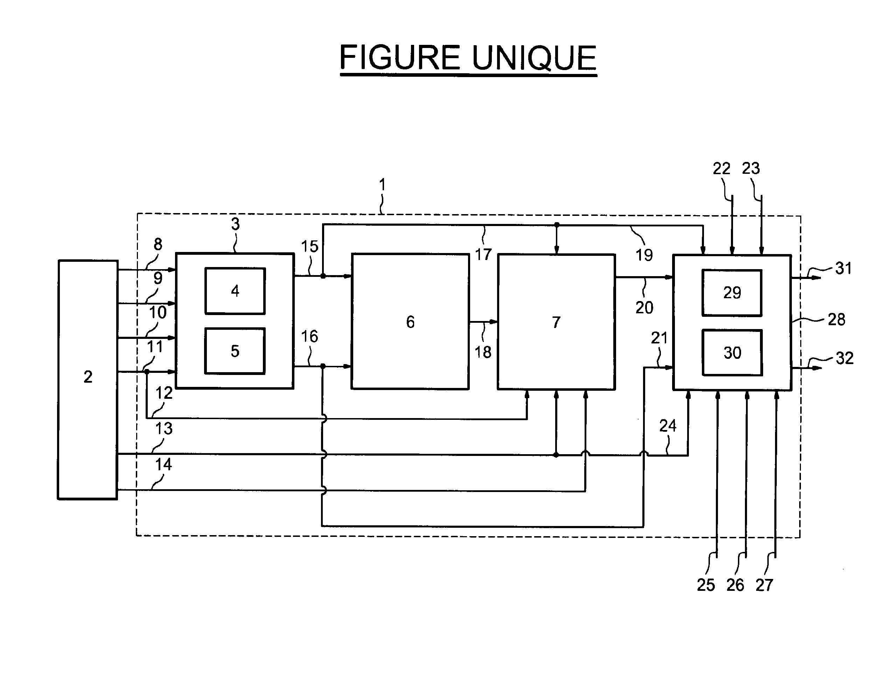

D'autres buts, caractéristiques et avantages apparaîtront à la lecture de la description suivante, donnée uniquement en tant qu'exemple non limitatif et faite en référence au dessin annexé sur lequel la figure unique illustre un système de commande d'un moteur à combustion interne selon l'invention.

Un moteur à combustion interne de type diesel est généralement pourvu d'un turbocompresseur dont le compresseur est situé entre l'admission d'air frais et le collecteur d'admission du moteur. La turbine du turbocompresseur est située entre le collecteur d'échappement du moteur et la conduite d'échappement. Afin de contrôler la composition des gaz aspirés dans les cylindres, certains moteurs à combustion interne sont munis d'un circuit de recirculation partielle des gaz d'échappement. Un circuit de recirculation partielle des gaz d'échappement permet de réinjecter dans les cylindres une partie des gaz d'échappement afin de modifier la stoechiométrie du mélange de gaz admis. Un circuit de recirculation partielle des gaz d'échappement (acronyme anglais : EGR pour « exhaust gaz recirculation » en langue anglaise) peut être situé dans la partie basse pression du moteur, c'est-à-dire en amont du compresseur, ou dans la partie haute pression, en aval du compresseur.

Un circuit EGR à basse pression est piqué entre d'une part le compresseur du turbocompresseur et l'admission d'air frais et d'autre part la turbine du turbocompresseur et l'échappement.

Un circuit EGR à haute pression est piqué entre d'une part le compresseur du turbocompresseur et le collecteur d'admission et d'autre part la turbine du turbocompresseur et le collecteur d'échappement.

Enfin, certains moteurs à combustion interne sont munis d'un circuit EGR à basse pression et d'un circuit EGR à haute pression.

Un système de commande d'un moteur à combustion interne muni d'un circuit EGR à basse pression et d'un circuit EGR à haute pression comprend notamment une boucle de rétroaction commandant le circuit EGR à basse pression et une boucle de rétroaction commandant le circuit EGR à haute pression.

Ces deux boucles de rétroaction utilisent chacune une estimation du débit d'EGR circulant dans le circuit EGR commandé. En s'appuyant sur la mesure de pression différentielle $\Delta P_{hp}$ aux bornes de la vanne EGR à haute pression, il est possible de déterminer le débit d'EGR à haute pression et le débit d'EGR à basse pression.

Le débit d'EGR à haute pression $\dot{m}_{egr,hp}$ est déterminé grâce à l'équation de Barré Saint Venant :

$$\dot{m}_{egr,hp} = S\left(u_{egr,hp}\right) \cdot \frac{p_{avt}}{\sqrt{T_{avt} \cdot R}} \cdot \sqrt{2 \cdot \pi_{egr,hp} \cdot \left(1 - \pi_{egr,hp}\right)} \qquad (Eq.\ 1)$$

Avec $S(u_{egr,hp})$ = Section de la conduite EGR haute pression

$p_{avt}$ = Pression avant turbine

$T_{avt}$ = Température avant turbine

R= la constante des gaz parfaits

$\pi_{egr,hp}$ = le rapport des pressions en aval et en amont de la vanne d'EGR haute pression

Le rapport des pressions $\pi_{egr,hp}$ se déduit de la mesure de pression différentielle $\Delta P_{hp}$ et de la pression dans le collecteur d'admission $P_1$ par application de l'équation suivante :

$$\pi_{egr,hp} = \frac{p_1}{p_{avt}} = \frac{p_1}{p_1 + \Delta p_{hp}} \qquad (Eq.\ 2)$$

Le débit d'EGR à basse pression $\dot{m}_{egr,bp}$ est déterminé à partir du débit d'EGR à haute pression $\dot{m}_{egr,hp}$, du débit d'air aspiré par le moteur $\dot{m}_{air}$ et de la mesure du débit d'air $\dot{m}_{in}$.

$$\dot{m}_{egr,bp} = \dot{m}_{in} - \dot{m}_{air} - \dot{m}_{egr,hp} \qquad (Eq.\ 3)$$

Le calcul des consignes repose sur un bilan des débits d'air massiques entre l'air, les gaz aspirés et les gaz brûlés. On peut donc transformer simplement la consigne de débit d'air en une consigne de débit d'EGR total en connaissant le débit aspiré.

$$\dot{m}_{in} = \dot{m}_{air} + \dot{m}_{egr} \qquad (Eq.\ 4)$$

Avec $\dot{m}_{egr} = \dot{m}_{egr,hp} + \dot{m}_{egr,bp}$

Le débit EGR total $\dot{m}_{egr}$ est réparti sur les circuits EGR de haute pression et de basse pression en introduisant une variable de répartition $R_{hp}$.

$$R_{hp} = \frac{\dot{m}_{egr,hp}}{\dot{m}_{egr}} = \frac{\dot{m}_{egr,hp}}{\dot{m}_{egr,hp} + \dot{m}_{egr,bp}} \qquad (Eq.\ 5)$$

En introduisant la variable de répartition $R_{hp}$, les consignes de débit d'EGR haute pression $\dot{m}_{egr,hp\_sp}$ et basse pression $\dot{m}_{egr,bp-sp}$ s'écrivent alors de la façon suivante :

$$\begin{cases} \dot{m}_{egr,hp\_sp} = R_{hp} \cdot \left(\dot{m}_{in\_sp} - \dot{m}_{air\_sp}\right) \\ \dot{m}_{egr,bp\_sp} = \left(1 - R_{hp}\right) \cdot \left(\dot{m}_{in\_sp} - \dot{m}_{air\_sp}\right) \end{cases} \qquad (Eq.\ 6)$$

Avec $\dot{m}_{in,sp}$ la consigne de remplissage.

La détermination de la consigne de remplissage est explicitée par l'équation 10 présentée plus loin dans la description.

Le rendement volumique $\eta_{vol}$ est cartographié en fonction de la vitesse de rotation du moteur Ne et en fonction de la densité des gaz $\rho_1$ dans le collecteur d'admission.

Le taux de répartition $R_{hp}$ est une variable de calibration que l'on présente sous la forme d'une cartographie où interviennent la vitesse de rotation du moteur Ne, la température de l'eau $T_{eau}$ du circuit d'eau de refroidissement du moteur à combustion interne et le débit de carburant injecté $\dot{m}_{f\_sp}$.

La dépendance vis-à-vis de la température de l'eau permet de commander de façon optimale la répartition du débit EGR en favorisant l'utilisation du circuit EGR à haute pression qui n'est pas refroidi lorsque le moteur est froid.

Lors de la montée en température du moteur, il est opéré une transition progressive entre l'utilisation du circuit EGR à haute pression et l'utilisation du circuit EGR à basse pression.

Lorsque le moteur est chaud, l'utilisation du circuit EGR à basse pression est favorisée.

Un tel système de commande présente un fonctionnement acceptable en régime stabilisé. Toutefois, de par la dépendance de ce système à des cartographies discrètes, il ne peut pas prendre en compte les phénomènes transitoires. Il en résulte des consignes de débit d'air, de débit d'EGR haute pression et de débit d'EGR basse pression qui sont approximatives et correspondent à des consignes pour un fonctionnement stabilisé. Une conséquence de telles approximations sont un rapport de mélange erroné dans le cylindre qui engendre une augmentation des émissions polluantes.

Pour pallier ces problèmes, il s'avère important d'accélérer le temps de réponse du système. Pour cela, une correction dynamique de chaque consigne EGR permet de minimiser le temps de réponse du système afin de réduire les émissions polluantes lors des phases de fonctionnement transitoire du moteur.

La figure unique illustre un système de commande selon l'invention. Ce système détermine des consignes corrigées correspondant aux consignes de débit du circuit EGR à basse pression et du circuit EGR à haute pression. Les consignes corrigées sont appliquées uniquement lors des phases de fonctionnement transitoire du moteur. Les points de fonctionnement stabilisé du moteur sont ainsi conservés inchangés.

Cette contrainte sur la consigne corrigée de débit d'EGR haute pression $\dot{m}_{egr,hp\_sp,corr}$ et sur la consigne corrigée de débit d'EGR basse pression $\dot{m}_{egr,bp\_sp,corr}$ s'exprime de la façon suivante en fonction des consignes de débit d'EGR haute pression $\dot{m}_{egr,hp\_sp}$ et basse pression $\dot{m}_{egr,bp\_sp}$

$$\begin{cases} \lim_{t \to \infty} \dot{m}_{egr,hp\_sp,corr}(t) = \dot{m}_{egr,hp\_sp}(t) \\ \lim_{t \to \infty} \dot{m}_{egr,bp\_sp,corr}(t) = \dot{m}_{egr,bp\_sp}(t) \end{cases} \qquad (Eq.\ 7)$$

La consigne corrigée de débit d'EGR haute pression $\dot{m}_{egr,hp\_sp,corr}$ et la consigne corrigée de débit d'EGR basse pression $\dot{m}_{egr,bp\_sp,corr}$ sont déterminées par application de l'équation 6 dans laquelle la consigne de débit d'air $\dot{m}_{air\_sp}$ est remplacée par une consigne de débit d'air corrigée $\dot{m}_{air\_sp,corr}$. On obtient alors l'équation suivante :

$$\begin{cases} \dot{m}_{egr,hp\_sp,corr} = R_{hp} \cdot \left( \dot{m}_{in\_sp} - \dot{m}_{air\_sp,corr} \right) \\ \dot{m}_{egr,bp\_sp,corr} = \left( 1 - R_{hp} \right) \cdot \left( \dot{m}_{in\_sp} - \dot{m}_{air\_sp,corr} \right) \end{cases} \qquad (Eq.\ 8)$$

Pour déterminer la consigne d'air corrigée, il est nécessaire de déterminer l'expression de la composition au niveau du collecteur d'admission, afin de modéliser le collecteur d'admission. La consigne d'air corrigée est déterminée en inversant la modélisation du collecteur d'admission. L'équation 13 détaillée plus loin dans la description permet de déterminer la consigne d'air corrigée.

La consigne de composition d'admission $F_{1sp}$ est déterminée par application de l'équation suivante :

$$F_{1sp} = \frac{(PCO + 1) \cdot \dot{m}_{f\_sp} \cdot \left( \dot{m}_{in\_sp} - \dot{m}_{air\_sp} \right)}{\dot{m}_{in\_sp} \cdot \left( \dot{m}_{f\_sp} + \dot{m}_{air\_sp} \right)} \qquad (Eq.\ 9)$$

avec PCO = valeur de richesse stoechiométrique, 14.5 pour le gasoil

$\dot{m}_{f\_sp}$ = consigne de débit de carburant

$\dot{m}_{in\_sp}$ = consigne de débit d'air inspiré par les cylindres

$\dot{m}_{air\_sp}$ = consigne de débit d'air

L'équation de la composition d'admission $F_{1sp}$ présente la particularité de ne pas faire intervenir la consigne de richesse à l'échappement.

On rappelle que le débit d'air aspiré par les cylindres $\dot{m}_{in\_sp}$ est calculé grâce à l'équation classique de remplissage.

$$\dot{m}_{in\_sp} = \eta_{vol} \cdot \frac{Ne}{120} Vd \frac{p_{1\_sp}}{R \cdot T_1} \qquad (Eq.\ 10)$$

avec $\eta_{vol}$ = le rendement volumétrique

Ne = la vitesse de rotation du moteur

Vd = la cylindrée

$p_{1\_sp}$ = la consigne de pression d'admission

R = la constante des gaz parfaits

$T_1$ = la température au niveau du collecteur d'admission

Dans le cas d'un moteur à combustion interne muni d'une recirculation partielle des gaz d'échappement à basse pression et à haute pression, on ne peut pas poser l'hypothèse que la température d'admission $T_1$ est égale à la température en aval du RAS $T_{11}$.

Pour déterminer la température $T_1$ qui n'est pas directement mesurable par un capteur, on utilise la relation suivante :

$$T_1 = \frac{T_{11} \cdot \dot{m}_c + T_{egr,hp} \cdot \dot{m}_{egr,hp}}{\dot{m}_c + \dot{m}_{egr,hp}} \qquad (Eq.\ 11)$$

Avec $T_{11}$ = la température en aval du refroidisseur d'air de suralimentation

$\dot{m}_c$ = le débit du compresseur

$T_{egr,hp}$ = Température des gaz du circuit d'EGR haute pression

Le débit EGR haute pression est calculé à partir de l'équation Barré Saint Venant précédemment explicitée (cf Eq. 1).

Par ailleurs, on accepte l'hypothèse selon laquelle la température en sortie de vanne EGR haute pression $T_{egr,hp}$ est égale à la température d'échappement $T_2$. La température d'échappement $T_2$ peut être déterminée grâce à un capteur ou estimée par une cartographie.

Connaissant l'expression du débit d'air aspiré et de la consigne de composition d'admission, il est possible de modéliser l'état du collecteur d'admission. Le système suivant de deux équations différentielles du premier ordre rend compte de cette modélisation.

$$\begin{cases} \dot{p}_1 = \dfrac{R \cdot T_1}{V_1} \cdot \left( \dot{m}_{air} + \dot{m}_{egr,hp} + \dot{m}_{egr,bp} - \eta_{vol} \cdot \dfrac{Ne}{120} Vd \dfrac{p_1}{R \cdot T_1} \right) \\ \dot{F}_1 = \dfrac{R \cdot T_1}{p_1 \cdot V_1} \cdot \left( \left( \dot{m}_{egr,hp} + \dot{m}_{egr,bp} \right) \cdot \left( F_2(t) - F_1 \right) - \dot{m}_{air} \cdot F_1 \right) \end{cases} \qquad (Eq. \ 12)$$

Lorsque l'on développe et que l'on inverse ce système d'équations, on obtient une solution de la forme suivante.

$$\dot{m}_{air\_sp,corr} = \dot{m}_{T1} + \dot{m}_{T2} + \dot{m}_{T3} + \dot{m}_{T4} \qquad (Eq. \ 13)$$

$$avec \qquad \dot{m}_{T1} = f\left( T_1, F_2, \dot{F}_{1\_sp}, p_{1\_sp} \right)$$
$$\dot{m}_{T2} = f\left( T_1, F_2, F_{1\_sp}, \dot{p}_{1\_sp} \right)$$
$$\dot{m}_{T3} = f\left( T_1, \dot{p}_{1\_sp} \right)$$
$$\dot{m}_{T4} = f\left( T_1, F_2, F_{1\_sp}, p_{1\_sp}, Ne \right)$$

et avec $F_2$ = la mesure de richesse à l'échappement.

Les trois premiers termes contiennent les dérivées de la consigne de pression ou de la consigne de composition dans le collecteur d'admission. En régime stabilisé, ces termes sont nuls. La valeur stationnaire de la consigne corrigée est alors donnée par le quatrième terme.

La température dans le collecteur d'admission, la vitesse de rotation du moteur et la richesse sont les principales mesures intervenant dans la détermination de la consigne corrigée. La mesure de richesse peut être remplacée par une estimation.

La valeur de la richesse à l'échappement $F_2$ peut être issue de la mesure par une sonde de richesse ou bien être déterminée par un estimateur.

Connaissant la consigne d'air corrigée, il est ainsi possible de déterminer les consignes corrigées de débit EGR à haute pression et à basse pression par application de l'équation 8.

Les consignes corrigées de débit EGR à haute pression et à basse pression permettent de résoudre le problème de l'augmentation d'émissions polluantes en régime transitoire. Toutefois, il est possible de pousser le raisonnement plus loin en appliquant à la répartition entre EGR haute pression et basse pression un raisonnement similaire à celui appliqué à la correction dynamique des consignes de débit.

En régime stationnaire, le rapport de répartition entre le circuit EGR basse pression et le circuit EGR haute pression n'est pas modifiable. En effet, le circuit EGR haute pression n'est pas muni d'un échangeur thermique, ce qui implique que son utilisation modifie la température des gaz au niveau de l'admission. On rappelle que la température des gaz au niveau de l'admission a un impact sur la quantité d'émissions polluantes. Pour garantir les performances attendues, il n'est donc pas permis d'utiliser le circuit EGR haute pression en dehors de la zone de fonctionnement ou en dehors du ratio prévu par la calibration.

En régime transitoire, la correction des consignes de remplissage a tendance à réduire le débit d'air par rapport à la consigne en régime stabilisé. Cet effet permet d'anticiper un retour en régime stabilisé et donc d'accélérer le temps réponse des circuits d'EGR. Toutefois, en régime transitoire, il est possible d'autoriser un degré de liberté de la répartition entre EGR basse pression et EGR haute pression afin de compenser le délai de réponse du circuit EGR basse pression par une utilisation ponctuelle du circuit EGR haute pression. Ce degré de liberté est obtenu d'une façon similaire à la correction dynamique des consignes de débit. Dans ce mode de fonctionnement particulier, la consigne corrigée de débit du circuit EGR haute pression est modifiée par ajout d'un terme $\dot{m}_{boost}$. Ce terme permet de maintenir un débit du circuit EGR haute pression non nul lorsque le taux de répartition $R_{hp}$ est nul. Le terme $\dot{m}_{boost}$ correspond à une suralimentation du circuit d'EGR haute pression.

Le terme $\dot{m}_{boost}$ correspond à l'écart entre la consigne de débit d'EGR haute pression $\dot{m}_{egr,hp\_set}$ p la consigne de débit d'EGR haute pression corrigée $\dot{m}_{egr,hp\_sp,corr}$.

En d'autres termes, la valeur de suralimentation $\dot{m}_{boost}$ correspond à l'écart entre la consigne de débit d'EGR haute pression en régime stabilisé et la consigne de débit d'EGR haute pression en régime transitoire.

Sur la figure unique, on peut voir un système de commande selon l'invention. Le système de commande 1 est connecté en entrée à des capteurs 2. Le système de commande 1 comprend un moyen d'estimation 3. Le moyen d'estimation 3 reçoit en entrée une valeur de la pression atmosphérique par la connexion 8, une valeur du débit de carburant par la connexion 9, une valeur de la température ambiante par la connexion 10 et une valeur de la vitesse de rotation du moteur à combustion interne par la connexion 11.

Le moyen d'estimation 3 émet en sortie une consigne de débit d'air admis par la connexion 16 et une consigne de pression d'admission par la connexion 15. Le moyen d'estimation 3 comprend une cartographie 5 du débit d'air admis et une cartographie 4 de la pression d'admission.

Un moyen de détermination 6 reçoit en entrée la consigne de débit d'air admis par la connexion 16 et la consigne de pression d'admission par la connexion 15 et émet en sortie une consigne de composition dans le collecteur d'admission par la connexion 18. La consigne de composition dans le collecteur d'admission est également appelée consigne de composition d'admission. Le moyen de détermination 6 applique l'équation 9 afin de déterminer la consigne de composition dans le collecteur d'admission.

Le moyen de correction 7 reçoit en entrée la consigne de composition d'admission par la connexion 18, la consigne de pression d'admission par une dérivation 17 de la connexion 15, la vitesse de rotation du moteur par la dérivation 12 de la connexion 11, la température d'admission par la connexion 13 et la richesse à l'échappement par la connexion 14. Le moyen de correction 7 émet en sortie une consigne corrigée de débit d'air initial par la connexion 20. Le moyen de correction 7 applique l'équation 13 afin de déterminer la consigne corrigée de débit d'air initial.

Le moyen 28 de correction des consignes d'EGR reçoit en entrée la consigne de pression d'admission par la connexion 19, la consigne corrigée de débit d'air initial par la connexion 20, la consigne de débit d'air initial par une dérivation 21 de la connexion 16, le débit estimé du circuit d'EGR basse pression par la connexion 22, le débit estimé du circuit d'EGR haute pression par la connexion 23, la température d'admission par la connexion 24, la température d'eau par la connexion 25, la différence de pression en amont et en aval de la vanne d'EGR haute pression par la connexion 26 et la pression d'admission par la connexion 27.

Le moyen 28 de correction des consignes d'EGR comprend une cartographie 29 de la répartition du débit EGR entre le circuit EGR à haute pression et le circuit EGR à basse pression.

Le moyen 28 de correction des consignes d'EGR applique l'équation 8 afin de déterminer la consigne corrigée de débit du circuit EGR haute pression et la consigne corrigée de débit du circuit EGR basse pression à partir de la consigne corrigée de débit d'air initial reçue du moyen de correction 7 par la connexion 20.

Le moyen 28 de correction des consignes d'EGR comprend par ailleurs un moyen de détermination 30 de débit de suralimentation du circuit EGR à haute pression apte à déterminer la valeur $\dot{m}_{boost}$ correspondant à la différence entre la consigne de débit d'EGR haute pression et la consigne corrigée de débit d'EGR haute pression reçues en entrée. Cette valeur de débit de suralimentation est alors additionnée à la consigne corrigée de débit du circuit EGR haute pression émise par la connexion 31. La consigne corrigée de débit du circuit EGR basse pression est quant à elle émise par la connexion 32.

Le système de commande 1 émet en sortie une consigne corrigée du débit du circuit EGR haute pression et une consigne corrigée du débit du circuit EGR basse pression permettant de maintenir une richesse de mélange optimale afin de limiter les émission polluantes lors des phases de fonctionnement transitoire du moteur à combustion interne.

## Revendications

1. Système de commande d'un moteur à combustion interne équipé d'un circuit de recirculation partielle des gaz d'échappement à basse pression et d'un circuit de recirculation partielle des gaz d'échappement à haute pression, comprenant un moyen d'estimation (3) de consignes de paramètres d'air admis, **caractérisé par le fait qu'**il comprend :

   un moyen d'estimation de la richesse d'échappement,
   un moyen de détermination (6) d'une consigne de la richesse d'admission en fonction de consignes de paramètres d'air admis,
   un moyen de correction (7) de l'une au moins des consignes de paramètres d'air admis en fonction de l'estimation de la richesse d'échappement et de la consigne de la richesse d'admission,
   un moyen de détermination d'une consigne corrigée de débit du circuit de recirculation partielle des gaz d'échappement à haute pression en fonction de la consigne corrigée de paramètres d'air admis, et

un moyen de détermination d'une consigne corrigée de débit du circuit de recirculation partielle des gaz d'échappement à basse pression en fonction de la consigne corrigée de paramètres d'air admis.

2. Système de commande selon la revendication 1, dans lequel le moyen de détermination d'une consigne de la richesse d'admission comprend une cartographie du rendement volumique et des moyens de mémorisation contenant la valeur de la richesse à la stoechiométrie, la constante des gaz et la cylindrée du moteur à combustion interne.

3. Système de commande selon l'une quelconque des revendications précédentes, comprenant un moyen de mesure de la température du collecteur d'admission, un moyen de mesure de la vitesse de rotation du moteur, et un moyen d'estimation de la richesse à l'échappement, dans lequel le moyen de correction (7) de l'une au moins des consignes de paramètres d'air admis est apte à déterminer une consigne corrigée de l'une au moins des consignes de paramètres d'air admis en fonction de l'estimation de richesse d'échappement, de la consigne de la richesse d'admission, de la température du collecteur d'admission, de la vitesse de rotation du moteur, et de la richesse à l'échappement.

4. Système de commande selon l'une quelconque des revendications précédentes, dans lequel la consigne corrigée de débit d'air admis correspond à la consigne de débit d'air admis si le moteur à combustion interne présente un fonctionnement stabilisé.

5. Système de commande selon l'une quelconque des revendications précédentes, dans lequel les paramètres d'air admis comprennent la pression d'air admis et le débit d'air admis.

6. Système selon l'une quelconque des revendications précédentes, comprenant un moyen de détermination (30) de débit de suralimentation du circuit de recirculation partielle des gaz d'échappement à haute pression apte à ajouter à la consigne corrigée de débit du circuit de recirculation partielle des gaz d'échappement à haute pression, une valeur de suralimentation correspondant à l'écart entre la consigne de débit du circuit de recirculation partielle des gaz d'échappement à haute pression et la consigne corrigée de débit du circuit de recirculation partielle des gaz d'échappement à haute pression.

7. Procédé de commande d'un moteur à combustion interne équipant un véhicule automobile, muni d'un circuit de recirculation partielle des gaz d'échappement à basse pression et d'un circuit de recirculation partielle des gaz d'échappement à haute pression, le procédé de commande comprenant une estimation de consignes de paramètres d'air admis, **caractérisé par le fait qu'**il comprend les étapes suivantes :

on estime la richesse d'échappement,
on détermine une consigne de la richesse d'admission en fonction des consignes de paramètres d'air admis,
on corrige l'une au moins des consignes de paramètres d'air admis en fonction de l'estimation de la richesse d'échappement et de la consigne de la richesse d'admission,
on détermine une consigne de débit du circuit de recirculation partielle des gaz d'échappement à haute pression en fonction de la consigne corrigée de paramètres d'air admis, et
on détermine une consigne de débit du circuit de recirculation partielle des gaz d'échappement à basse pression en fonction de la consigne corrigée de paramètres d'air admis.

8. Procédé selon la revendication 7, dans lequel on corrige l'une au moins des consignes de paramètres d'air admis en fonction de la vitesse de rotation du moteur, de la température d'admission et de la richesse d'échappement.

9. Procédé selon l'une quelconque des revendications 7 ou 8, dans lequel la correction de l'une au moins des consignes de paramètres d'air admis laisse inchangée ladite consigne de paramètre d'air admis lorsque le moteur à combustion interne est en fonctionnement stabilisé.

10. Procédé selon l'une quelconque des revendications 7 à 9, dans lequel les paramètres d'air admis comprennent la pression d'air admis et le débit d'air admis.

11. Procédé selon l'une quelconque des revendications 7 à 10, dans lequel on ajoute à la consigne corrigée de débit du circuit de recirculation partielle des gaz d'échappement à haute pression, un débit de suralimentation correspondant à l'écart entre la consigne de débit du circuit de recirculation partielle des gaz d'échappement à haute pression et la consigne corrigée de débit du circuit de recirculation partielle des gaz d'échappement à haute pression.

**Patentansprüche**

1. Steuersystem eines Verbrennungsmotors, der mit einem Kreislauf zur teilweisen Rezirkulation der Abgase mit Niederdruck und einem Kreislauf zur teilweisen Rezirkulation der Abgase mit Hochdruck ausgestattet ist, das ein Schätzungsmittel (3) von Ansaugluft-Parametersollwerten umfasst, **dadurch gekennzeichnet, dass** es Folgendes umfasst:

   ein Schätzungsmittel der Auspuffreichhaltigkeit,
   ein Mittel zum Bestimmen (6) eines Sollwerts der Ansaugreichhaltigkeit in Abhängigkeit von Ansaugluft-Parametersollwerten,
   ein Mittel zum Korrigieren (7) mindestens eines der Ansaugluft-Parametersollwerte in Abhängigkeit von der Schätzung der Auspuffreichhaltigkeit und des Sollwerts der Ansaugreichhaltigkeit,
   ein Mittel zum Bestimmen eines korrigierten Durchflusssollwerts des Kreislaufs zur teilweisen Rezirkulation der Abgase mit Hochdruck in Abhängigkeit von dem korrigierten Ansaugluft-Parametersollwert, und
   ein Mittel zum Bestimmen eines korrigierten Durchflusssollwerts des Kreislaufs zur teilweisen Rezirkulation der Abgase mit Niederdruck in Abhängigkeit von dem korrigierten Ansaugluft-Parametersollwert.

2. Steuersystem nach Anspruch 1, wobei das Bestimmungsmittel eines Sollwerts der Ansaugreichhaltigkeit eine Kartographie der Brennstoffleistungsdichte und Speichermittel umfasst, die den Wert der Reichhaltigkeit bei der Stöchiometrie, die Konstante der Gase und den Hubraum des Verbrennungsmotors enthalten.

3. Steuersystem nach einem der vorhergehenden Ansprüche, das ein Mittel zum Messen der Temperatur des Ansaugkrümmers, ein Mittel zum Messen der Drehzahl des Motors und ein Mittel zum Schätzen der Reichhaltigkeit am Auspuff umfasst, wobei das Korrekturmittel (7) mindestens eines der Ansaugluft-Parametersollwerte geeignet ist, um einen korrigierten Sollwert mindestens eines der Ansaugluft-Parametersollwerte in Abhängigkeit von der Schätzung der Auspuffreichhaltigkeit, des Sollwerts der Ansaugreichhaltigkeit, der Temperatur des Ansaugkrümmers, der Drehzahl des Motors und der Reichhaltigkeit am Auspuff zu bestimmen.

4. Steuersystem nach einem der vorhergehenden Ansprüche, wobei der korrigierte Ansaugluft-Durchflusssollwert dem Ansaugluft-Durchflusssollwert entspricht, falls der Verbrennungsmotor einen stabilisierten Betrieb aufweist.

5. Steuersystem nach einem der vorhergehenden Ansprüche, wobei die Ansaugluftparameter den Ansaugluftdruck und den Ansaugluftdurchfluss umfassen.

6. System nach einem der vorhergehenden Ansprüche, das ein Mittel zum Bestimmen (30) des Aufladedurchflusses des Kreislaufs zur teilweisen Rezirkulation der Abgase mit hohem Druck umfasst, das geeignet ist, um zu dem korrigierten Durchflusssollwert des Kreislaufs zur teilweisen Rezirkulation der Abgase mit Hochdruck einen Aufladewert hinzuzufügen, der dem Unterschied zwischen dem Durchflusssollwert des Kreislaufs zur teilweisen Rezirkulation der Abgase bei Hochdruck und dem korrigierten Durchflusssollwert des Kreislaufs zur teilweisen Rezirkulation der Abgase mit Hochdruck entspricht.

7. Steuerverfahren eines Verbrennungsmotors, der ein Kraftfahrzeug ausstattet, das mit einem Kreislauf zur teilweisen Rezirkulation der Abgase mit Niederdruck und einem Kreislauf zur teilweisen Rezirkulation der Abgase mit Hochdruck ausgestattet ist, wobei das Steuerverfahren eine Schätzung von Ansaugluft-Parametersollwerten umfasst, **dadurch gekennzeichnet, dass** es die folgenden Schritte umfasst:

   Schätzen der Auspuffreichhaltigkeit,
   Bestimmen eines Sollwerts der Ansaugreichhaltigkeit in Abhängigkeit von den Ansaugluft-Parametersollwerten,
   Korrigieren mindestens eines der Ansaugluft-Parametersollwerte in Abhängigkeit von der Schätzung der Auspuffreichhaltigkeit und dem Ansaugreichhaltigkeitssollwert,
   Bestimmen eines Durchflusssollwerts des Kreislaufs zur teilweisen Rezirkulation der Abgase mit Hochdruck in Abhängigkeit von dem korrigierten Ansaugluft-Parametersollwert, und
   Bestimmen eines Durchflusssollwerts des Kreislaufs zur teilweisen Rezirkulation der Abgase mit Niederdruck in Abhängigkeit von dem korrigierten Ansaugluft-Parametersollwert.

8. Verfahren nach Anspruch 7, wobei man mindestens einen der Ansaugluft-Parametersollwerte in Abhängigkeit von der Drehzahl des Motors, der Ansaugtemperatur und der Auspuffreichhaltigkeit korrigiert.

**9.** Verfahren nach einem der Ansprüche 7 oder 8, wobei die Korrektur des mindestens einen Ansaugluft-Parametersollwerts den Ansaugluft-Parametersollwert unverändert lässt, wenn sich der Verbrennungsmotor im stabilisierten Betrieb befindet.

**10.** Verfahren nach einem der Ansprüche 7 bis 9, wobei die Ansaugluftparameter den Ansaugluftdruck und den Ansaugluftdurchfluss umfassen.

**11.** Verfahren nach einem der Ansprüche 7 bis 10, wobei man zu dem korrigierten Durchflusssollwert des Kreislaufs zur teilweisen Rezirkulation der Abgase mit Hochdruck einen Aufladedurchfluss hinzufügt, der dem Unterschied zwischen dem Durchflusssollwert des Kreislaufs zur teilweisen Rezirkulation der Abgase mit Hochdruck und dem korrigierten Durchflusssollwert des Kreislaufs zur teilweisen Rezirkulation der Abgase mit Hochdruck entspricht.

**Claims**

**1.** System for controlling an internal combustion engine equipped with a circuit for partial recirculation of the low-pressure exhaust gases and with a circuit for partial recirculation of the high-pressure exhaust gases, comprising an estimating means (3) of estimating admitted air parameter setpoints, **characterized in that** it comprises:

> a means of estimating the exhaust richness,
> a determining means (6) for determining an intake richness setpoint as a function of admitted air parameter setpoints,
> a correcting means (7) of correcting at least one of the admitted air parameter setpoints as a function of the estimate of the exhaust richness and of the intake richness setpoint,
> a determining means for determining a corrected setpoint for the flow rate of the high pressure partial exhaust gas recirculation circuit as a function of the corrected admitted air parameter setpoint, and
> a determining means for determining a corrected setpoint for the flow rate of the low pressure partial exhaust gas recirculation circuit as a function of the corrected admitted air parameter setpoint.

**2.** Control system according to Claim 1, in which the means for determining an intake richness setpoint comprises a map of the volumetric efficiency and memory storage means containing the stochiometric richness value, the universal gas constant and the cylinder capacity of the internal combustion engine.

**3.** Control system according to either one of the preceding claims, comprising a measuring means for measuring the temperature of the intake manifold, a measuring means for measuring the rotational speed of the engine, and an estimating means estimating the exhaust richness, in which system the correcting means (7) for correcting at least one of the intake air parameter setpoints is able to determine a corrected setpoint for at least one of the admitted air parameter setpoints as a function of the estimated exhaust richness, the intake richness setpoint, the intake manifold temperature, the rotational speed of the engine, and the exhaust richness.

**4.** Control system according to any one of the preceding claims, in which the corrected air intake flow rate setpoint corresponds to the admitted air flow rate setpoint if the internal combustion engine is exhibiting stable operation.

**5.** Control system according to any one of the preceding claims, in which the admitted air parameters include the admitted air pressure and the admitted air flow rate.

**6.** System according to any one of the preceding claims, comprising a determining means (30) for determining the boost flow rate of the high pressure partial exhaust gas recirculation circuit which is able to add to the corrected high pressure partial exhaust gas recirculation circuit flow rate setpoint a boost value corresponding to the difference between the high pressure partial exhaust gas recirculation circuit flow rate setpoint and the corrected high pressure partial exhaust gas recirculation circuit flow rate setpoint.

**7.** Method for controlling an internal combustion engine fitted to a motor vehicle, equipped with a low pressure partial exhaust gas recirculation circuit and with a high pressure partial exhaust gas recirculation circuit, the control method comprising estimating admitted air parameter setpoints, **characterized in that** it comprises the following steps:

> the exhaust richness is estimated,
> an intake richness setpoint is determined as a function of the admitted air parameter setpoints,

at least one of the admitted air parameter setpoints is corrected as a function of the estimate of the exhaust richness and of the intake richness setpoint,

a high pressure partial exhaust gas recirculation circuit flow rate setpoint is determined as a function of the corrected admitted air parameter setpoint, and

a low pressure partial exhaust gas recirculation circuit flow rate setpoint is determined as a function of the corrected admitted air parameter setpoint.

8. Method according to Claim 7, in which at least one of the admitted air parameter setpoints is corrected as a function of the rotational speed of the engine, of the intake temperature and of the exhaust richness.

9. Method according to either one of Claims 7 and 8, in which the correcting of at least one of the admitted air parameter setpoints leaves said admitted air parameter setpoint unchanged when the internal combustion engine is in stable operation.

10. Method according to any one of Claims 7 to 9, in which the admitted air parameters comprise the admitted air pressure and the admitted air flow rate.

11. Method according to any one of Claims 7 to 10, in which there is added to the corrected high pressure partial exhaust gas recirculation circuit flow rate setpoint a boost flow rate corresponding to the difference between the high pressure partial exhaust gas recirculation circuit flow rate setpoint and the corrected high pressure partial exhaust gas recirculation circuit flow rate setpoint.

# FIGURE UNIQUE